# EUROPÄISCHE PATENTSCHRIFT

(11) **EP 0 469 261 B1**
(45) Veröffentlichungstag und Bekanntmachung des Hinweises auf die Patenterteilung: **27.07.1994**
(21) Anmeldenummer: 91108499.4
(22) Anmeldetag: 25.05.1991
(51) Int. Cl.: F02M 31/135

(54) **Ansaugeinrichtung für eine gemischverdichtende Brennkraftmaschine**
Suction device for a mixture compressing internal combustion engine
Dispositif d'aspiration pour un moteur à combustion interne à compression de mélange

(30) Priorität: 28.07.1990 DE 4024005
(43) Veröffentlichungstag der Anmeldung: 05.02.1992
(73) Patentinhaber: MERCEDES-BENZ AG, 70327 Stuttgart (DE)
(72) Erfinder: Henke, Jürgen, W-7314 Wernau (DE); Früh, Peter, W-7056 Weinstadt 2 (DE); Mehne, Georg, W-7162 Gschwend (DE)

(56) Entgegenhaltungen:
- EP-A- 0 234 052
- EP-A- 0 248 503
- EP-A- 0 267 645
- EP-A- 0 343 652
- EP-A- 0 406 546
- EP-A- 0 453 927
- DE-C- 3 426 469
- US-A- 4 313 413

## Beschreibung

Die Erfindung betrifft eine Ansaugeinrichtung für eine gemischverdichtende Brennkraftmaschine nach dem Oberbegriff des Patentanspruchs 1.

Eine solche gattungsgemäße Ansaugeinrichtung ist aus der US-A 4,313,413 bekannt. Hierbei ist im Saugkanal stromab einer Kraftstoffzumeßeinrichtung (Vergaser) ein Heizkörper angeordnet. Der Heizkörper umfaßt dabei eine innerhalb des Saugkanalquerschnittes liegende Heizplatte die über eine Stütze mit einem Sockelteil verbunden ist. An der Unterseite des Saugkanals ist eine Öffnung vorgesehen, durch welche der Heizkörper in den Saugkanal eingebaut und über das Sockelteil an der Kanalwandung befestigt ist.

Von Nachteil ist die zylinderförmige Gestalt der Stütze, durch die eine baulich einfache Integration des Heizkörpers in einen sich in zwei Einzelsaugkanälen aufteilenden Saugkanal - wie er bei Brennkraftmaschinen mit zwei Einlaßventilen häufig verwendet wird - nicht möglich ist.

Ferner ist aus der DE-C 34 26 469 eine Ansaugeinrichtung bekannt, bei der nahe der Motorventilöffnung ein ringförmiges Heizelement vorgesehen ist, in das der Kraftstoff schräg eingespritzt wird, wobei der Heizring mit seiner Längsachse im wesentlichen in Strömungsrichtung liegt. Nachteilig bei einem solchen Heizring ist es, daß der Kraftstoffstrahl durch eine der offenen Stirnseiten des Heizringes in diesen schräg eingeleitet werden muß. Da sich der Kraftstoffstrahl beim Austritt aus der Einspritzdüse auffächert, muß der Heizring entweder relativ nahe an der Einspritzdüse angeordnet sein, oder der sich auffächernde Kraftstoffstrahl trifft zum großen Teil auf die geschlossene Stirnringfläche des Heizringes sowie auf dessen Außenmantel auf. Dadurch kommt es zu einer unerwünschten Verwirbelung des eingespritzten Kraftstoffstrahles an dem Heizringelement. Letzterer Fall tritt insbesondere dann auf, wenn der Heizring in an sich erwünschter Weise möglichst nahe an der Motorventilöffnung angebracht ist und die Einspritzdüse nur mit einiger Entfernung zu dem Heizring vorgesehen werden kann. Solche Abstände sind häufig durch die Einbauverhältnisse zwangsläufig gegeben.

Der Erfindung liegt die Aufgabe zugrunde, die gattungsgemäße Ansaugeinrichtung derart weiterzubilden, daß eine einfache bauliche Integration des Heizkörpers auch in einem Saugkanal mit sich in zwei Einzelsaugkanälen verzweigenden Kanalquerschnitt ohne Beeinträchtigung der Gemischverteilung erreicht wird.

Gelöst wird diese Aufgabe durch die kennzeichnenden Merkmale des Anspruches 1.

Bei der erfindungsgemäßen Ausführung wird die Heizplatte von dem auf die Motorventilöffnung ausgerichteten Kraftstoffstrahl schräg beaufschlagt. Dadurch bildet das erfindungsgemäße Heizelement nur einen äußerst geringen Strömungswiderstand, wodurch übermäßige unkontrollierte Verwirbelungen im Bereich des Heizelementes vermieden werden.

Weiterhin ist von Vorteil, daß der Heizkörper durch die Form der Stütze auf baulich einfache Weise in einem Saugkanal mit sich verzweigenden Einzelkanälen integriert werden kann, da die Stütze eine Verlängerung der Trennwand bildet, wodurch gleichzeitige schädliche Strömungswirbel vermieden werden.

In der Zeichnung zeigen
- Figur 1: einen Schnitt durch einen Ansaugkanal mit verzweigen Einzelsaugkanälen eines Zylinderkopfes und mit in den Ansaugkanal hineinragender Heizplatte,

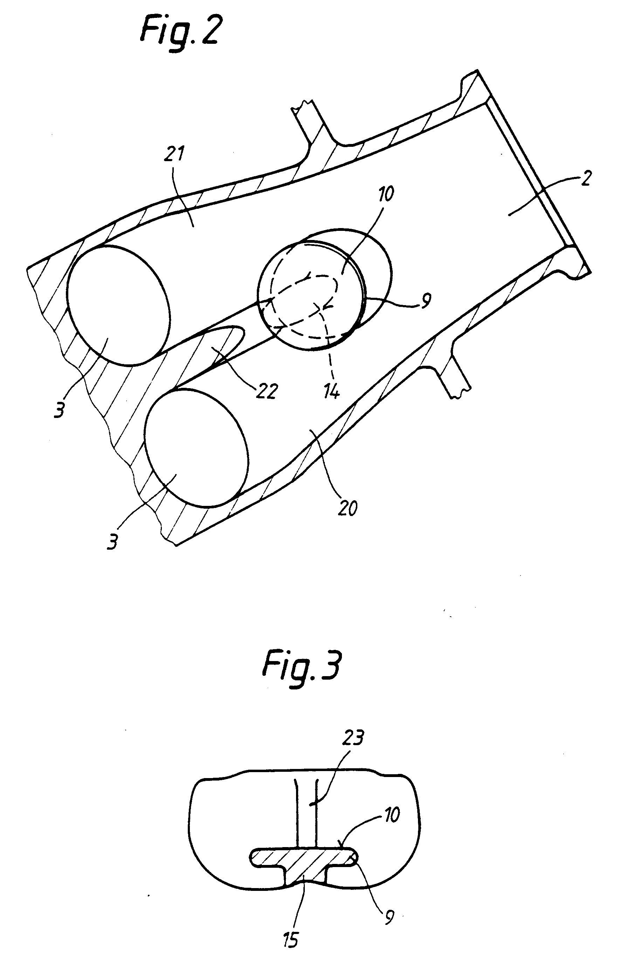

- Figur 2: einen Schnitt durch den Ansaugkanal nach Linie II-II in Fig. 1,
- Figur 3: einen Schnitt durch einen Teilbereich des Ansaugkanales nach Linie III-III in Fig. 1.

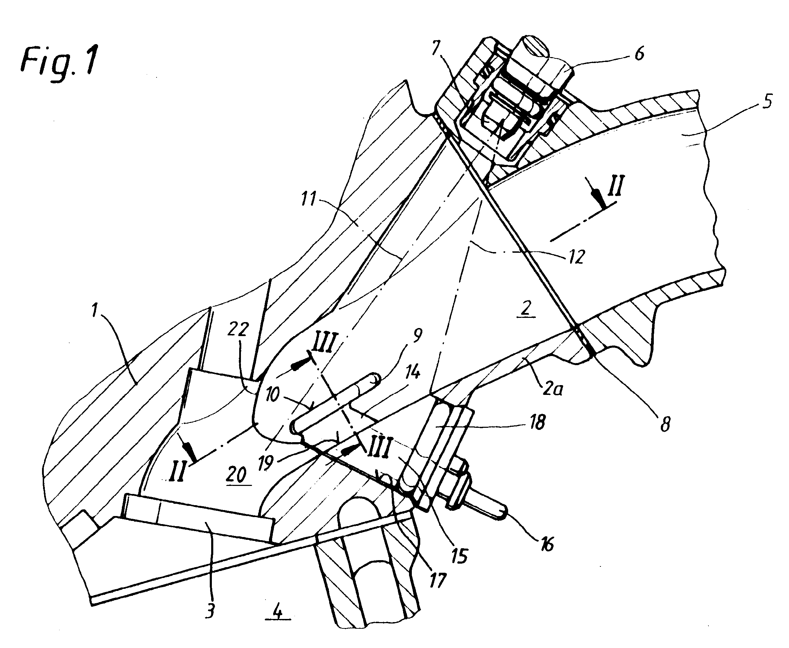

Die in Fig. 1 dargestellte Saugeinrichtung umfaßt einen in einem Zylinderkopf 1 einer nicht näher dargestellten Vier-Ventilbrennkraftmaschine vorgesehenen Saugkanal 2, der über Ventilöffnungen 3 in einen der Motorzylinder 4 mündet, und eine sich an den Saugkanal 2 anschließende Saugrohrleitung 5. In der Saugrohrleitung 5 ist eine Einspritzdüse 6 als Kraftstoffzumeßeinrichtung in Strömungsrichtung der Verbrennungsluft geneigt angeordnet, deren Düsenspitze 7 etwa im Bereich der Flanschebene 8 zwischen Zylinderkopf 1 und Saugrohrleitung 5 in den Saugrohrkanal 2 einmündet. Mit der Einspritzdüse 6 wird Kraftstoff dosiert in die Verbrennungsluft eingespritzt. Um bei einem Kaltstart und in der Warmlaufphase der Brennkraftmaschine im Saugrohr eine gute Gemischzusammensetzung von Kraftstoff und Verbrennungsluft zu erreichen, ist in dem Saugkanal 2 eine Heizplatte 9 eingesetzt. Dabei ragt die Heizplatte 9 in den Saugkanal 2 hinein. Die im wesentlichen flache ungestützte Oberfläche 10 der Heizplatte 9 auf die der aus der Einspritzdüse 6 kommende Kraftstoffstrahl 11, 12 auftrifft, verläuft im wesentlichen parallel zu der Längsachse des Ansaugkanales 2. Die Oberfläche 10 der Heizplatte 9 kann in ihrem Winkel gegenüber der Längsachse des Saugkanales bzw. der Achse des Brennstoffstrahles variiert werden. Wichtig ist jedoch, daß ein Auftreffen des Brennstoffstrahles auf die Oberfläche 10 unter einem etwa spitzen Winkel gegeben ist.

Die Heizplatte 9 ist über eine quer zur Strömungsrichtung der Verbrennungsluft schmale Stütze 14 an einem zylindrischen Sockelteil 15 abgestützt. Am Sockelteil 15 sind ferner Steckkontakte 16 für ein PTC-Heizelement in der Heizplatte 9 angebracht. Das Sockelteil 15 ist einfach in eine zylindrische Öffnung 17 in einer Kanalwand 2a eingeschoben und durch einen Dichtring 18 wärme- und gasmäßig innerhalb des Zylinderkopfes gedichtet. Die Öffnung 17 ist dabei an einer Unterseite der Kanalwand 2a angeordnet. Dabei liegt eine Stirnseite 19 des Sockelteils 15 bündig zur Saugkanal-Wandfläche des Saugkanals 2.

Der Saugkanal 2 teilt sich vor der Ventilöffnung 3 in zwei getrennte Einzelsaugkanäle 20, 21 auf. Die Heizplatte 9 ist direkt stromauf einer Trennwand 22 zwischen den Einzelsaugkanälen 20, 21 angeordnet. Auf diese Weise dient die Stütze 14 der Heizplatte 9 praktisch als Verlängerung der Trennwand 22.

Auf der Oberfläche 10 der Heizplatte 9 kann in Verlängerung der Trennwand 22 eine Rippe 23 senkrecht zur Plattenoberfläche angebracht sein. Um einen weiterhin verbesserten Wärmeübergang von dem Heizelement der Heizplatte 9 auf das Kraftstoff-Verbrennungsluft-Gemisch zu erzielen, kann die Oberfläche 10 der Heizplatte 9 mit verschiedenartig geformten Rippen oder Stacheln aus gut wärmeleitendem Material versehen sein. Die Heizplatte 9 liegt äußerst strömungsgünstig vollständig in dem aufgefächerten Kraftstoffstrahl zusammen mit der sich in dem Ansaugkanal 2 mit dem Kraftstoff vermischenden Ansaugluft.

## Patentansprüche

1. Ansaugeinrichtung für eine gemischverdichtende Brennkraftmaschine mit einem im Saugkanal (2) stromab einer Kraftstoffzumeßeinrichtung angeordneten flächigen und von der Verbrennungsluft im wesentlichen umströmten Heizkörper, der als flache Heizplatte (9) mit einem Heizelement aus einem Werkstoff mit einem positiven Widerstandstemperaturkoeffizienten ausgebildet ist, wobei die Heizplatte (9) eine von zumindest einem Teil des von der Kraftstoffzumeßeinrichtung abgegebenen Kraftstoffes beaufschlagte, weitgehend flache Oberfläche (9a) aufweist, die im wesentlichen parallel zur Kanalwand (2a) des Saugkanals (2) verlaufend ausgerichtet ist und von welcher Oberfläche (9a) aus der Kraftstoff zu einer nahegelegenen Ventilöffnung (3) gelangt,
wobei ferner die Heizplatte (9) über eine rechtwinklig von einer der Oberfläche (9a) gegenüberliegenden Flachseite des Heizkörpers (9) abstehenden Stütze (14) auf einem Sockelteil (15) abgestützt ist, an dem ein elektrischer Anschluß für das Heizelement angeordnet ist
und wobei die Heizplatte (9) durch eine an der Unterseite der Kanalwand (2a) angeordnete Öffnung (17) in den Saugkanal (2) einsetzbar und über das Sockelteil (15) innerhalb der Öffnung (17) im wesentlichen wärmeisoliert und derart fixierbar ist, daß eine dem Saugkanal (2) zugewandte Stirnseite (19) des Sockelteils (15) bündig mit der Innenwand des Saugkanals (2) abschließt,
**dadurch gekennzeichnet,**
daß die Kraftstoffzumeßeinrichtung eine Einspritzdüse (6) ist, zu der die weitgehend flache Oberfläche (9a) der Heizplatte (9) zugewendet ist,
daß das Sockelteil (15) den Heizkörper am Zylinderkopf (1) hält, daß der Ansaugkanal (2) an seinem stromabseitigen Ende durch eine Trennwand (22) in zwei Einzelsaugkanäle (20, 21) geteilt ist und daß die Heizplatte (9) direkt an der Verzweigungsstelle für beide Einzelsaugkanäle (20, 21) angeordnet ist
und daß die Stütze (14) flachprofilförmig ausgebildet ist, die mit ihrer Schmalseite quer zur Strömungsrichtung der Verbrennungsluft im Saugkanal (2) ausgerichtet als Verlängerung der Trennwand (22) dient.

2. Ansaugeinrichtung nach Anspruch 1,
**dadurch gekennzeichnet**,
daß die Stütze (14) in Strömungsrichtung des Saugkanals (2) nur einen Teil der Heizplatte (9) erfaßt, wobei sich dieser Teil der Trennwand (22) direkt anschließt.

## Claims

1. Intake device for a mixture-compressing internal-combustion engine having a sheet-like heating body which is arranged in the intake channel (2) downstream of a fuel-metering device, is essentially flowed around by the combustion air and is designed as a flat heating plate (9) with a heating element of a material of a positive temperature resistance coefficient, the heating plate (9) having an essentially flat surface (9a) which is impinged by at least part of the fuel discharged by the fuel-metering device, is aligned such that it runs essentially parallel to the channel wall (2a) of the intake channel (2) and from which surface (9a) the fuel passes to a nearby valve opening (3), the heating plate (9) furthermore being supported by means of a support (14), protruding at right angles from a flat side of the heating body (9) lying opposite the surface (9a), on a base part (15) on which there is arranged an electrical connection for the heating element, and the heating plate (9) being adapted for fitting into the intake channel (2), through an opening (17) arranged on the underside of the channel wall (2a), and is adapted for fixing by means of the base part (15) within the opening (17) in an essentially heat-insulated manner and in such a way that an end face (19) of the base part (15), facing the intake channel (2), terminates flush with the inside wall of the intake channel (2), characterized in that the fuel-metering device is an injection nozzle (6), to which the essentially flat surface (9a) of the heating plate (9) is made to face, in that the base part (15) holds the heating body on the cylinder head (1), in that the intake channel (2) is divided at its downstream end into two individual intake channels (20, 21) by a partition wall (22) and in that the heating plate (9) is arranged directly at the branching point for the two individual intake channels (20, 21) and in that the support (14) is designed in the shape of a flat profile which, aligned with its narrow side transversely to the direction of flow of the combustion air in the intake channel (2), serves as an extension of the partition wall (22).

2. Intake device according to Claim 1, characterized in that the support (14) acts only on part of the heating plate (9) in the direction of flow of the intake channel (2), this part directly adjoining the partition wall (22).

## Revendications

1. Dispositif d'admission pour un moteur à combustion interne à compression de mélange comportant un corps chauffant plat, monté dans le canal d'admission (2), en aval d'un dispositif de dosage de carburant et entouré essentiellement par l'air de combustion, qui se présente sous la forme d'une plaque chauffante (9) avec un élément chauffant réalisé dans un matériau présentant un coefficient de température de résistance positif, dans lequel la plaque chauffante (9) présente une surface (9a) pratiquement plate, recevant au moins une partie du carburant délivré par le dispositif de dosage de carburant, laquelle surface (9a) est sensiblement parallèle à la paroi (2a) du canal d'admission et à partir de laquelle le carburant parvient à une ouverture de soupape (3) située à proximité, dans lequel en outre la plaque chauffante (9) est soutenue sur un élément en socle (15), par un appui (14) dépassant à angle droit d'un côté plat, faisant face à la surface (9a), du corps chauffant (9), sur lequel élément en socle est prévu un branchement électrique pour l'élément chauffant et dans lequel la plaque chauffante (9) peut être placée dans le canal d'admission (2), par une ouverture (17) pratiquée sur la face inférieure de la paroi (2a) du canal et est essentiellement isolée thermiquement par l'élément en socle (15), à l'intérieur de l'ouverture (17), et peut être fixée de manière qu'un côté frontal (19), tourné vers le canal d'admission (2), de l'élément en socle (15), prolonge dans le même temps la paroi intérieure du canal d'admission (2), caractérisé en ce que le dispositif de dosage de carburant est une buse d'injection (6) vers laquelle est tournée la surface (9a) pratiquement plate de la plaque chauffante (9), en ce que l'élément en socle (15) maintient le corps chauffant sur la culasse (1), en ce que le canal d'admission (2) est partagé en deux canaux d'admission (20, 21) individuels, par une cloison (22), à son extrémité aval et en ce que la plaque chauffante (9) est placée directement au point d'embranchement des deux canaux d'admission (20, 21) individuels et en ce que l'appui (14) a un profil plat qui avec son petit côté orienté transversalement à la direction d'écoulement de l'air de carburation dans le canal d'admission (2), sert de prolongement à la cloison (22).

2. Dispositif d'admission selon la revendication 1, caractérisé en ce que l'appui (14) ne concerne dans le sens d'écoulement du canal d'admission (2) qu'une partie de- la plaque chauffante (9), cette partie se raccordant directement à la cloison (22).
